# EUROPEAN PATENT APPLICATION

(11) **EP 2 753 132 A1**
(43) Date of publication of application: **09.07.2014**
(21) Application number: 13199773.6
(22) Date of filing: 30.12.2013
(51) Int. Cl.: H04W 60/04, G08G 1/01, H04W 36/32

(54) **Large-scale human mobility pattern recognition**

(30) Priority: 08.01.2013 US 201313736589
(71) Applicant: Telefonaktiebolaget L M Ericsson AB (Publ), 164 83 Stockholm (SE)
(72) Inventor: Xing, Bo, Fremont, CA 94555 (US); Li, Du, Palo Alto, CA 93403 (US)
(74) Representative: Rees, Simon John Lewis

(57) **Abstract**

A method for grouping trips of a mobile device, a trip including a set of trip traces from a plurality of traces collected from base stations. Each base station includes a unique station-ID. Each trace includes a station-ID and an association time indicating when the mobile device was associated with the base station. The mobile device is associated with at most one base station at any point in time. The method to group two trips by calculating an edit distance using an approximate string matching algorithm. The method includes identifying traces for the two trips, extracting ordered sets of station-IDs from the traces, calculating the edit distance between the two trips by applying the approximate string matching algorithm to the ordered sets of station-IDs, checking if the edit distance is less than a preset edit distance threshold, and grouping the two trips into a group of trips.

## Description

### FIELD OF THE INVENTION

The embodiments of the invention relate to the field of mobility pattern recognition. Specifically, the embodiments relate to identifying mobility patterns from traces of association between a mobile device and a base station.

### BACKGROUND

Mobility patterns provide information regarding patterns of movement for people. These patterns can be for an individual, or for a crowd of people (e.g., the population of a city). For example, a mobility pattern of an individual can provide information including the typical travel times and paths of trips between home and work for the individual. A mobility pattern of a crowd can provide information including the congestion times or the amount of congestion at a particular time for a road or route. Mobility patterns are typically derived from data relating to the time and location of people as they move between different geographical locations. Such data can be collected from different sources and analyzed to identify mobility patterns. Understanding mobility patterns can have many beneficial uses, including finding rideshare solutions for an individual or solving transportation problems of big cities.

Several different techniques currently exist for collecting the time and location data of people's movements. For example, one existing technique for collecting such data for an individual requires the installation of special tracking software on a mobile device of the individual. The tracking software typically relies on features of the mobile device such as Global Positioning Systems (GPS) or Wi-Fi to provide the location data. As the user of the mobile device moves between different locations while carrying the mobile device, the tracking software collects time and location data, which can then be used to derive mobility patterns for the user.

Another existing technique for collecting time and location data of crowds uses sensors on public transportation units (e.g., buses or trains) or alongside roads. These sensors collect data regarding the number of people that use the public transportation units or the number of vehicles that pass by a sensor on a road. In turn, transportation planning agencies can use such data to identify crowd mobility patterns that indicate which public transportation routes are overcrowded or which roads are over congested.

### SUMMARY

In one embodiment, a method is executed by a computer processor for grouping a plurality of trips of a mobile device. Each trip in the plurality of trips includes a set of trip traces from a plurality of traces for the mobile device. The plurality of traces is collected from a plurality of base stations and stored in a trace storage. Each base station in the plurality of base stations includes a unique station-ID. Each trace in the plurality of traces includes a station-ID of a base station and an association time indicating when the mobile device was associated with the base station. The mobile device is associated with at most one base station at any point in time. The method to group a first trip in the plurality of trips and a second trip in the plurality of trips by calculating an edit distance between the first trip and the second trip using an approximate string matching algorithm. The method includes identifying a first set of trip traces for the first trip and a second set of trip traces for the second trip in the plurality of traces for the mobile device. A first ordered set of station-IDs is extracted from the first set of trip traces and a second ordered set of station-IDs is extracted from the second set of trip traces, each ordered set of station-IDs being ordered by association time. The edit distance is calculated between the first trip and the second trip by applying the approximate string matching algorithm to the first ordered set of station-IDs and the second ordered set of station-IDs. The edit distance between the first trip and the second trip is checked to determine if it is less than a preset edit distance threshold. The first trip and the second trip are grouped into a group of trips if the edit distance is less than the preset edit distance threshold.

In another embodiment, a system groups a plurality of trips of a mobile device. Each trip in the plurality of trips includes a set of trip traces from a plurality of traces for the mobile device. The plurality of traces is collected from a plurality of base stations. Each base station in the plurality of base stations includes a unique station-ID. Each trace in the plurality of traces includes a station-ID of a base station and an association time indicating when the mobile device was associated with the base station. The mobile device is associated with at most one base station at any point in time. The system to group a first trip in the plurality of trips and a second trip in the plurality of trips by calculating an edit distance between the first trip and the second trip using an approximate string matching algorithm. The system comprises a trace storage, a trip finding module coupled to the trace storage, an edit distance calculation module, and a trip grouping module. The trace storage is configured to store the plurality of traces. The trip finding module is configured to identify a first set of trip traces for the first trip and a second set of trip traces for the second trip in the plurality of traces for the mobile device. The edit distance module is configured to extract a first ordered set of station-IDs from the first set of trip traces and a second ordered set of station-IDs from the second set of trip traces, each ordered set of station-IDs being ordered by association time. The edit distance module is further configured to calculate the edit distance between the first trip and the second trip by applying the approximate string matching algorithm to the first ordered set of station-IDs and the second ordered set of station-IDs. The trip grouping module is configured to check that the edit distance between the first trip and the second trip is less than a preset edit distance threshold, and group the first trip and the second trip into a group of trips in response to determining that the edit distance is less than the preset edit distance threshold.

### BRIEF DESCRIPTION OF THE DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
**Figure 1** is a flowchart of one embodiment of a process for identifying a first trip and a second trip in a plurality of traces for a mobile device and grouping the trips by calculating the edit distance between the trips.
**Figure 2** is a flowchart of one exemplary embodiment of a process for identifying a first mobility pattern from a group of trips.
**Figure 3** is a flowchart of one exemplary embodiment of a process for combining a first mobility pattern of a mobile device and a second mobility pattern of a different mobile device into a crowd mobility pattern.
**Figure 4** is a diagram of one embodiment of a system for grouping trips from a plurality of traces and identifying mobility patterns from the groups of trips.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description. In other instances, control structures, gate level circuits and full software instruction sequences have not been shown in detail in order not to obscure the invention. Those of ordinary skill in the art, with the included descriptions, will be able to implement appropriate functionality without undue experimentation.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

To facilitate understanding of the embodiments, dashed lines have been used in the figures to signify the optional nature of certain items (e.g., features not supported by a given embodiment of the invention; features supported by a given embodiment, but used in some situations and not in others).

The techniques shown in the figures can be implemented using code and data stored and executed on one or more electronic devices. Such electronic devices store and communicate (internally and/or with other electronic devices over a network) code and data using non-transitory tangible computer-readable storage medium (e.g., magnetic disks; optical disks; read only memory; flash memory devices; phase-change memory) and transitory computer-readable communication medium (e.g., electrical, optical, acoustical or other forms of propagated signals-such as carrier waves, infrared signals, digital signals, etc.). In addition, such electronic devices typically include a set or one or more processors coupled with one or more other components, such as a storage device, one or more input/output devices (e.g., keyboard, a touchscreen, and/or a display), and a network connection. The coupling of the set of processors and other components is typically through one or more busses or bridges (also termed bus controllers). The storage device and signals carrying the network traffic respectively represent one or more non-transitory tangible computer-readable medium and transitory computer-readable communication medium. Thus, the storage device of a given electronic device typically stores code and/or data for execution on the set of one or more processors of that electronic device. Of course, one or more parts of an embodiment of the invention may be implemented using different combination of software, firmware, and/or hardware.

As used herein, a network element (e.g., a router, switch, bridge) is a piece of networking equipment, including hardware and software, that communicatively interconnects other equipment on the network (e.g., other network elements, end stations). Some network elements are "multiple services network elements" that provide support for multiple networking functions (e.g., routing, bridging, switching, Layer 2 aggregation, session border control, Quality of Service, and/or subscriber management), and/or provide support for multiple application services (e.g., data, voice, and video). Subscriber end stations (e.g., servers, workstations, laptops, netbooks, palm tops, mobile phones, smart phones, multimedia phones, Voice Over Internet Protocol (VOIP) phones, user equipment, terminals, portable media players, GPS units, gaming systems, set-top boxes) access content/services provided over the Internet and/or content/services provided on virtual private networks (VPNs) overlaid on (e.g., tunneled through) the Internet. The content and/or services are typically provided by one or more end stations (e.g., server end stations) belonging to a service or content provider or end stations participating in a peer to peer service, and may include, for example, public webpages (e.g., free content, store fronts, search services), private webpages (e.g., username/password accessed webpages providing email services), and/or corporate networks over VPNs. Typically, subscriber end stations are coupled (e.g., through customer premise equipment coupled to an access network (wired or wirelessly)) to edge network elements, which are coupled (e.g., through one or more core network elements) to other edge network elements, which are coupled to other end stations (e.g., server end stations).

Presently, a vast majority of the people living in developed countries carry and use mobile devices daily. As used herein, a mobile device includes any subscriber end station capable of communicating wirelessly with a base station. Examples of mobile devices include mobile phones, smart phones, tablet computers, laptops, and netbooks. A base station, as used herein, includes any network element that communicates wirelessly to interconnect other equipment on the network. While smart phones and tablet computers make up an increasingly higher percentage of the mobile devices in use each day, the majority of mobile devices in use are still mobile phones that are not considered smart phones.

Mobile devices are supported by well-covered cellular networks of base stations. Each base station covers a certain geographical area typically ranging from hundreds of yards to a few miles. A mobile device is associated with at most one base station at a time. Each time a mobile device is associated with a base station, a trace of the association is recorded by the base station. These traces typically include data identifying the mobile device, the base station, the association start time, and the association end time. As a mobile device travels from one location to another, one or more traces are generated at each base station that the mobile device is associated with during the trip.

The embodiments of the invention provide a method and system for analyzing the traces that are generated at these base stations. Traces generated by multiple base stations for multiple mobile devices can be collected and stored at a centralized trace storage. This trace storage can be implemented on a single storage device or a plurality of storage devices that are coupled to each other (e.g., through a network). After collecting the traces into the trace storage, the traces can be analyzed to identify mobility patterns for individuals and crowds using embodiments described herein.

Current techniques for identifying mobility patterns rely on collecting data from sources with limited information. For example, an existing technique for collecting time and location data of individuals requires special tracking software to be installed on each user's mobile device. The tracking software typically relies on features of the device such as GPS or Wi-Fi to provide location data. Thus, the number of individual sources of data for this technique is limited by the number of people that have mobile devices capable of supporting such software (i.e., mobile phones that are not considered smart phones typically do not have GPS functionality or the capability to install specialized software). Furthermore, some users are not willing to install such tracking software even if they have capable devices, while other users may not have the knowledge that such software is available. This further limits the number of individual sources of data that is available for identifying crowd mobility patterns. Further still, the features that tracking software rely upon places an additional load on the power source of the mobile device, which can deter some users from running the software at all times and limit the amount of data available for these individuals.

Another existing technique for identifying crowd mobility patterns collects data from sensors deployed on public transportation units or alongside roads. Similar to the specialized tracking software technique, the amount and type of data that can be collected from these sensors are limited. For example, although the sensors can provide ample amounts of data on travel conditions for existing roads and public transportation routes, the sensors cannot provide any data from the perspective of individuals. More specifically, the sensors do not have data regarding the origin or destination of each individual's trips. Rather, the sensors can only provide data for certain points or segments along the route of each trip. Due to this limitation in the source of the collected data, the utility of the crowd mobility patterns that are identified from this data is also limited. For example, transportation planning agencies are unable to utilize these crowd mobility patterns to identify new roads or routes that would benefit the population since the patterns do not provide origin and destination information. Rather, the patterns identified from these sources can only be used to identify existing roads or routes that need expansion.

The embodiments of the present invention overcome the disadvantages of the prior art by implementing a process that identifies and groups trips from a collection of association traces between mobile devices and base stations. After traces from multiple base stations are collected, trips are identified in the collection of traces for an individual mobile device. Any two trips that have been identified for the mobile device can be grouped together if the edit distance between the two trips is less than a threshold. Other trips can also be added to the group based on edit distance. When a considerable number of trips have been grouped together, a mobility pattern is identified from the group of trips for the individual user of the mobile device. Furthermore, multiple individual mobility patterns can be aggregated to identify crowd mobility patterns. The advantages of the embodiments described herein include a larger user base and data source since no user interaction is necessary to collect data from the user. Furthermore, overhead is reduced and greater privacy can be achieved for the users since the precise geographical location of users is not required.

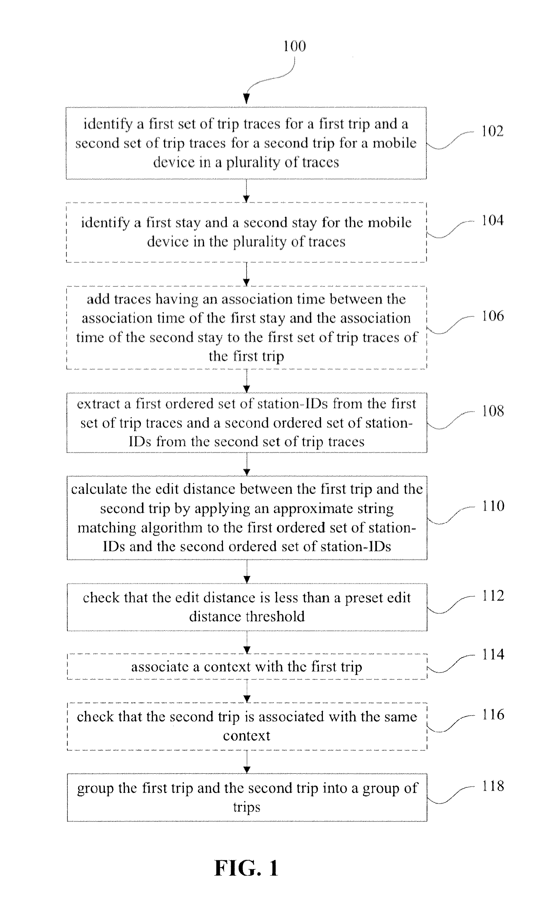

**Figure 1** is a flowchart of one embodiment of a process for identifying a first trip and a second trip in a plurality of traces for a mobile device and grouping the trips by calculating the edit distance between the trips. The process is typically implemented by one or more computer processors that are connected to a trace storage. The computer processors can be any type of processing device including a general or central processing unit, an application specific integrated circuit (ASIC) or similar processing device. The computer processors can be connected with the trace storage by a set of buses routed over a set of mainboards or similar substrates coupled to each other. Alternatively, the computer processors and trace storage can be connected through a network.

The trace storage can be implemented on a single storage device or a plurality of storage devices. In one embodiment, each of the plurality of traces stored in the trace storage is generated by a base station after the mobile device has an association with the base station. In another embodiment, the plurality of traces is generated by the mobile device. The traces are collected in the trace storage after they have been generated. The trace storage can be configured to store only the traces for a single mobile device, or the trace storage can store traces for multiple mobile devices.

Each trace includes data identifying the mobile device, the base station, the association start time, and the association end time. Hereinafter, data from a trace that identifies the mobile device will be referred to as a device-ID, and data identifying the base station will be referred to as a station-ID. In one embodiment where the traces are generated by the base stations, the station-ID is not associated with a trace when the trace is generated. Rather, the station-ID is appended to each trace when the traces are collected from the base stations.

An example of a trace that is stored in the trace storage can look like the following: (deviceID1, stationID1, ("2012-09-03T09:00:00", "2012-09-03T09:05:00")). For simplicity, time zone information has been omitted from this example trace. This trace indicates that the mobile device having a device-ID of deviceID1 was associated with the base station having a station-ID of stationID1. The date of the association is September 3, 2012, and the time of association is during 9:00 a.m. to 9:05 a.m.

In one embodiment, the process is started by identifying a first set of trip traces for a first trip and a second set of trip traces for a second trip for a mobile device in the plurality of traces (Block 102). Since any mobile device can only have one active association at any time, the association time of each trace for the mobile device will not overlap with any other trace for the mobile device. Thus, an example set of trip traces for a mobile device whose device-ID is deviceID1 can look like the following: [(stationID0, ("2012-09-03T08:55:00", "2012-09-03T09:00:00")), (stationID1, ("2012-09-03T09:00:00", "2012-09-03T09:05:00")), (stationID2, ("2012-09-03T09:05:00", "2012-09-03T09:10:00"))]. The device-ID is omitted from this example set of trip traces for simplicity.

The first set of trip traces for the first trip can be identified by searching for a number of traces that have continuous association times and unique station-IDs. Thresholds can be used to further filter out some of the traces from being considered when identifying trips. Thus, the example set of trip traces discussed above can be identified as the first trip if the thresholds are set such that a trip requires three or more traces with continuous association times and unique station-IDs, and each trace has an association time less than ten minutes. The identified first trip can be a regular daily trip (e.g., between work and home) or an ad-hoc trip (e.g., when a user stops at the airport to pick up a passenger or visits a newly-opened restaurant for a lunch).

In another embodiment, trip traces are identified and added to the first set of trip traces of the first trip after identifying a first stay and a second stay for the mobile device (Block 104). In areas where the cellular coverage is sparse, a trace with an association time lasting longer than a threshold (e.g., 30 minutes) indicates a stay (i.e., no travelling). At places with dense cellular coverage, if a mobile device oscillates between a few base stations but the total time associated with those base stations is longer than a threshold, a stay is identified from the traces of those associations. In one embodiment, the geographical distances between the base stations that the mobile device had oscillating associations with are also checked to determine if the geographical distances are less than a threshold setting before a stay is identified from the traces.

Once stays are identified, each of the first set of trip traces for the first trip can be identified as a trace having an association time between the association times of the first stay and the second stay (Block 106). Similarly, the embodiments described herein can be used to identify the second set of trip traces for the second trip.

After identifying the trip traces for each trip, a first ordered set of station-IDs is extracted from the first set of trip traces and a second ordered set of station-IDs is extracted from the second set of trip traces (Block 108). Each station-ID in an ordered set of station-IDs is arranged in order of association time of the trace that the station-ID was extracted from. Thus, an example ordered set of station-IDs extracted from the example set of trip traces provided above can look like the following: (stationID0, stationID1, stationID2).

At Block 110, the edit distance between the first trip and the second trip is calculated by applying an approximate string matching algorithm to the first ordered set of station-IDs and the second ordered set of station-IDs. An approximate string matching algorithm (also known as fuzzy string searching) determines the edit distance between two strings in terms of the number of primitive operations necessary to convert one string into an exact match of the other string. Primitive operations include insertion, deletion, substitution, and transportation.

For example, the edit distances between the strings in the following pairs are all one: "cot" & "coat," "coat" & "cot," "coat" & "cost," and "cost" and "cots." This is because "cot" becomes "coat" with one insertion; "coat" becomes "cot" with one deletion; "coat" becomes "cost" with one substitution; and "cost" becomes "cots" with one transportation. In some embodiments, the approximate string matching algorithm also takes into account the physical distance between keys on a keyboard when applied to two strings. For example, if the edit distance of a substitution operation to a non-adjacent key is defined as two, the edit distance between "cost" and "vost" will be one while the edit distance between "cost" and "most" will be two. This is because "v" is adjacent to "c" on a regular keyboard whereas "m" is not adjacent to "c." Alternatively, the edit distance of operations on non-adjacent keys can vary based on the actual physical distance between the keys. For example, in one embodiment, the edit distance between "cost" and "most" can be four, since there are three other keys between "c" and "m" on a regular keyboard (i.e. "v," "b," and "n").

The approximate string matching algorithm is applied to the first ordered set of station-IDs and the second ordered set of station-IDs by analogizing the station-IDs to the characters in a string and the geographical distance (or adjacency) between base stations to the physical distance (or adjacency) between keys on a keyboard. For example, assume that the first ordered set of station-IDs is (stationID0, stationID1, stationID2, stationID3, stationID4, stationID5), and the second ordered set of station-IDs is (stationID0, stationID6, stationID1, stationID2, stationID3, stationID7, stationID8). Also assume that stationID4 and stationID7 are adjacent, while stationID5 and stationID8 are not adjacent. For primitive operations on non-adjacent base stations, assume that the edit distance is two. Hence, the edit distance between the first ordered set of station-IDs and the second ordered set of station-IDs is four. This is because the first ordered set is converted into the second ordered set with one adjacent substitution (stationID4 -> stationID7), one insertion (stationID6), and one non-adjacent substitution (stationID5 -> stationID8). Alternatively, the edit distance of the non-adjacent substitution (stationID5 -> stationID8) can be determined based on the actual geographical distance between the two stations.

After calculating the edit distance, the edit distance is checked to determine if the edit distance is less than a preset edit distance threshold (Block 112). If it is, the first trip and the second trip are grouped into a group of trips (Block 118). Other trips can then be added to the group using the embodiments described herein. In one embodiment, a trip is added to the group of trips if the edit distance between that trip and each trip in the group is less than the preset edit distance threshold.

In another embodiment, a context is associated with the first trip before grouping the first trip and the second trip (Block 114). A context captures a temporal and/or geographical concept for a trip that helps with interpreting trips and gaining more knowledge from raw sets of traces. For example, a context can include general concepts such as time of day and day of week. A context can also include concepts specific to a geographical area (e.g., a city or a country), such as seasons, local holidays, and school time. In one embodiment, the contexts can be predefined and stored in a storage device, and can be reconfigured later if necessary.

A context is associated with a trip based on information derived from the trip. This information can include the geographical location of the associated base stations during the trip, the association time of the trip, and information derived from the device-ID, such as the area code of the phone number associated with the mobile device. For example, a trip that has been associated with several contexts can look like the following: {[(stationID0, ("2012-09-03T08:55:00", "2012-09-03T09:00:00")), (stationID1, ("2012-09-03T09:00:00", "2012-09-03T09:05:00")), (stationID2, ("2012-09-03T09:05:00", "2012-09-03T09:10:00"))], morning, Monday, fall, non-holiday, school-open}. In this example, the associated contexts are morning, Monday, fall, non-holiday, and school-open.

In another embodiment, user demographic information can also be associated with trips. User demographic information includes gender, age range, ethnicity, marital status, and location or region of the user. Much of this information is already known to operators of the base stations and may be authorized by the user for anonymous use.

After associating a context with the first trip, the second trip is checked to determine if the second trip is associated with the same context (Block 116). In these embodiments, the first trip and the second trip is grouped into a group of trips only if the first trip and the second trip share the same contexts and the edit distance is less than the edit distance threshold (Block 118). Other trips can be added to the group using the embodiments described herein if the other trips also share the same contexts.

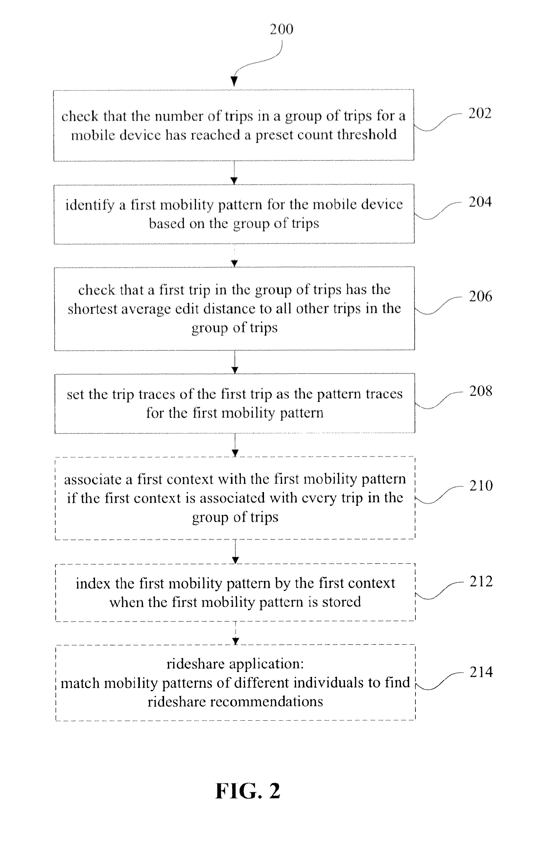

**Figure 2** is a flowchart of one exemplary embodiment of a process for identifying a first mobility pattern from a group of trips. The process is typically implemented by one or more computer processors. Furthermore, the process can be implemented by the same processors that identify and group trips, or the process can be implemented by different processors.

In one embodiment, the process starts by checking that the number of trips in a group of trips for a mobile device has reached a preset count threshold (Block 202). This can be done for each group of trips periodically (e.g., once a day). Alternatively, this can be done for a group of trips each time a trip is added to the group.

If the number of trips in the group has reached the count threshold, a first mobility pattern is identified for the mobile device based on the group of trips (Block 204). In one embodiment, the mobility pattern extracted from a group of trips is represented by the trip that has the shortest average edit distance to all other trips in the group. Thus, at Block 206, a first trip in the group of trips is checked to determine if the first trip has the shortest average edit distance to all other trips in the group of trips. If it does, the set of trip traces of the first trip is set as the set of pattern traces for the first mobility pattern (Block 208).

In embodiments where a first context is associated with the trips in the group of trips, the first context is also associated with the first mobility pattern (Block 210). Furthermore, the first mobility pattern can be indexed by the first context, and any other contexts associated with the mobility pattern, when the mobility pattern is stored (Block 212). In another embodiment, the user demographic information that is associated with the trips in the group of trips is also associated with the first mobility pattern and indexed when the first mobility pattern is stored.

In some embodiments, an occurrence rating can be calculated for each mobility pattern of a mobile device. The occurrence rating of a mobility pattern is the number of trips in the group of trips that the pattern is identified from, normalized over the total number of trips that the mobile device has in the plurality of traces. In these embodiments, the mobility patterns can also be stored in descending order of occurrence rating.

In another embodiment, mobility patterns for a mobile device can be combined to create new mobility patterns. For example, assume that a first mobility pattern of a mobile device is associated with the context "school-open." Further assume that a second mobility pattern for the same mobile device is associated with the context "school-closed." If the edit distance between the first mobility pattern and the second mobility pattern is less than a threshold, the two mobility patterns can be combined to create a new mobility pattern for the mobile device such that the "school-open" and the "school-closed" contexts are not associated with the new mobility pattern. In a different embodiment, only mobility patterns that have the highest occurrence rating out of all mobility patterns associated with the same context are combined. The process of combining mobility patterns can be performed periodically, or it can be performed each time a new mobility pattern is identified.

One example application for the identified mobility patterns of individual mobile devices is a rideshare application (Block 214). When a user makes a request for a rideshare recommendation, the user can specify the time and duration of the rideshare recommendation (e.g., for three months, two weeks, or just once). Furthermore, in one embodiment, the user can also enter his or her current geographical location. Alternatively, the geographical location can be determined using GPS or other technology if the user is requesting the rideshare recommendation using a device with such capabilities. Based on the time, duration, and geographical location, a list of contexts can be generated (e.g., if it is just for once, the list of contexts could be as specific as (morning, Monday, fall, non-holiday, school-open)).

Before submitting the request, the user of the mobile device can be presented with a short list of trips that the user most likely needs rideshare for. This list includes the mobile device's highest occurring mobility patterns for the generated contexts (e.g., summer, school-closed). Furthermore, the patterns can be mapped to coarse-grained origin/destination pairs (e.g., North Fremont to North San Jose) before they are presented to the user. This mapping can be based on the earliest trace and the latest trace (in terms of association time) in the set of pattern traces for each pattern. If none of the trips in the list is what the user is looking for, the user can manually enter the origin/destination addresses. The addresses can then be reverse-mapped to station-IDs of base stations near the addresses.

Thus, the request for recommendation can be expressed as a mobility pattern of the user's mobile device, including a set of traces and associated contexts. The mobility pattern of the request is matched with the mobility patterns of other mobile devices that are associated with the same contexts using embodiments described herein. The users of the mobile devices that have matching mobility patterns with the highest occurrence ratings are the top recommended candidates for ridesharing.

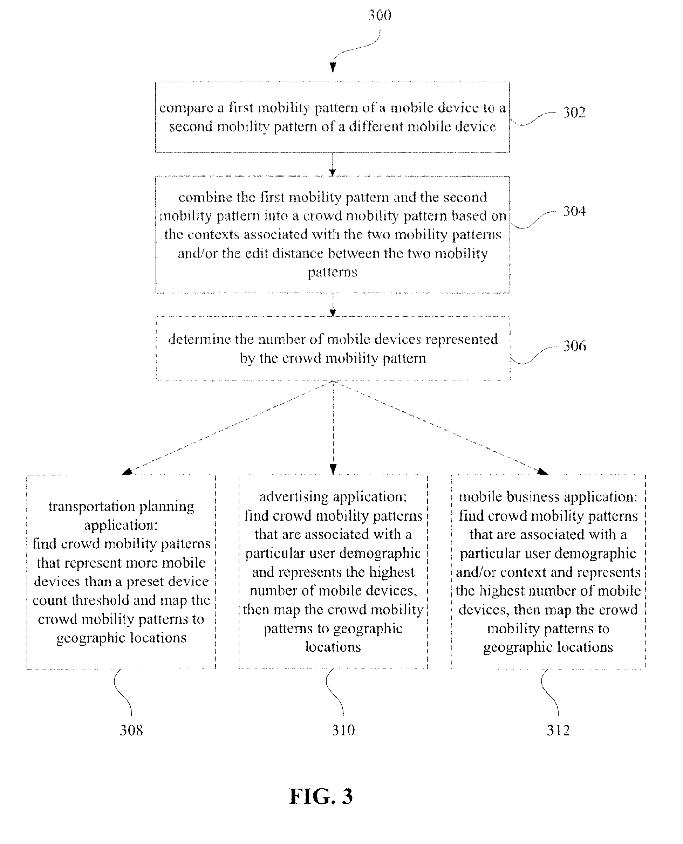

**Figure 3** is a flowchart of one exemplary embodiment of a process for combining a first mobility pattern of a mobile device and a second mobility pattern of a different mobile device into a crowd mobility pattern. This process is typically implemented by one or more computer processors.

In one embodiment, the process starts by comparing a first mobility pattern of a mobile device to a second mobility pattern of a different mobile device (Block 302). This can be performed periodically to identify crowd mobility patterns of different scales (e.g., a city or an area). Alternatively, this can be performed each time a new mobility pattern for an individual mobile device is identified. The first mobility pattern and the second mobility pattern is combined into a crowd mobility pattern based on the contexts associated with the two mobility patterns and/or the edit distance between the two mobility patterns (Block 304). In another embodiment, user demographic information associated with the two mobility patterns can also be compared before the two mobility patterns are combined.

Other mobility patterns can be combined into the crowd mobility pattern based on the same factors. In some embodiments, the contexts and/or user demographic information that are associated with individual mobility patterns represented by the crowd mobility pattern are also associated with the crowd mobility pattern. This can be done by associating the crowd mobility pattern with all contexts and/or user demographic information that are associated with any of the mobility patterns represented by the crowd mobility pattern. Alternatively, only the contexts and/or user demographic information that are associated with every mobility pattern represented by the crowd mobility pattern are associated with the crowd mobility pattern. In another embodiment, the number of mobile devices represented by the crowd mobility pattern can be determined (Block 306).

There are several applications for these crowd mobility patterns. In one example embodiment, the crowd mobility patterns can be used for transportation planning (Block 308). The goal of the transportation planning application is to find out daily mobility patterns that concern more than a threshold number of people (e.g., 100 people) and do not have adequate roads or public transportation routes. This can be achieved by searching for mobility patterns that represent more than 100 mobile devices. The results of the search are then mapped to geographic coordinates or locations to determine roads and routes that need expansion.

In another example application, the crowd mobility patterns can be used in advertising, where the goal is to find out where (e.g., at a static location or on buses/subways) and when (e.g., what times and in what seasons) to display advertisements in order to maximize the number of viewers for a target audience (e.g., teenage men) (Block 310). This could be achieved by specifying the user demographic information (teenage, male) and searching for the crowd mobility patterns that are associated with the target user demographic information and represent the most number of mobile devices. The results of the search can then mapped to geographic coordinates or locations to determine where to display advertisements, and the contexts associated with the results can be used to determine when to display advertisements.

In another example application, the crowd mobility patterns can be used by mobile businesses (e.g., food trucks), where the goal is to find out what location a mobile business should be at during certain times (Block 312). For example, a food truck will benefit from knowing the popular destinations of people in a target demographic on a particular day of a week. This can be achieved by specifying the target demographic information and contexts (e.g., day of a week) when searching for crowd mobility patterns that represent the most number of mobile devices. The results of the search can then be mapped to geographic coordinates or locations to determine ideal locations for the food truck.

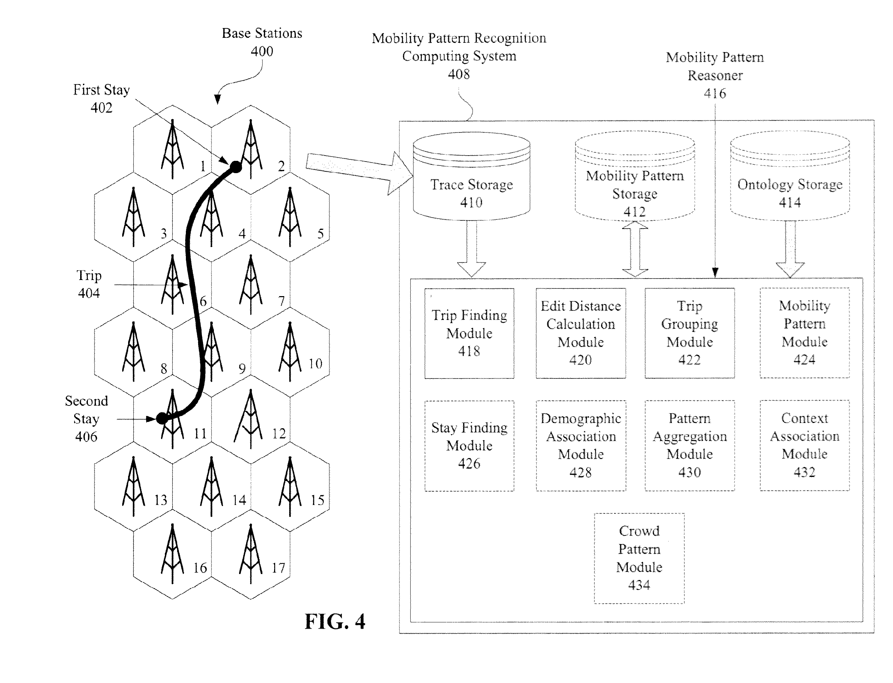

**Figure 4** is a diagram of one embodiment of a system for grouping trips from a plurality of traces and identifying mobility patterns from the groups of trips. Base stations 400 is a cellular network of base stations with station-IDs ranging from stationID1-stationID17. First stay 402, trip 404, and second stay 406 of a mobile device are depicted on base stations 400. An example set of stay traces generated by base stations 400 for first stay 402 can look like the following: [(stationID2, ("2012-09-03T08:45:00", "2012-09-03T09:00:00"))]. An example set of trip traces generated for trip 404 can look like the following: [(stationID4, ("2012-09-03T09:00:00", "2012-09-03T09:05:00")), (stationID6, ("2012-09-03T09:05:00", "2012-09-03T09:10:00")), (stationID9, ("2012-09-03T09:10:00", "2012-09-03T09:15:00"))]. An example set of stay traces generated for second stay 406 can look like the following: [(stationID11, ("2012-09-03T09:15:00", "2012-09-03T09:30:00"))]. The device-ID of the mobile device is omitted from these example sets of traces for simplicity.

Mobility pattern recognition computing system 408 analyzes these traces that are generated by base stations 400 according to any of the embodiments described herein. Mobility pattern recognition computing system 408 includes a trace storage 410, a mobility pattern storage 412, an ontology storage 414, and a mobility pattern reasoner 416. Mobility pattern reasoner 416 further includes a trip finding module 418, an edit distance calculation module 420, a trip grouping module 422, a mobility pattern module 424, a stay finding module 426, a demographic association module 428, a pattern aggregation module 430, a context association module 432, and a crowd pattern module 434. The three storages 410-414 can be implemented on a single storage device or a plurality of storage devices. Mobility pattern reasoner 416 can be implemented on any type of processing device including a general or central processing unit, an application specific integrated circuit (ASIC) or similar processing device. The storage devices can be connected with the processing device implementing mobility pattern reasoner 416 by a set of buses routed over a set of mainboards or similar substrates coupled to each other. Alternatively, the storage devices and processing device can be connected through a network.

In one embodiment, the plurality of traces generated by base stations 400 are collected and stored at trace storage 410. Trip finding module 418 identifies trips in the plurality of traces stored at trace storage 410. Edit distance calculation module 420 calculates edit distances between trips and trip grouping module 422 groups the trips if the edit distance is below a preset threshold. Mobility pattern module 424 identifies mobility patterns from the groups of trips. These mobility patterns can be stored at mobility pattern storage 412. Stay finding module 426 identifies stays in the plurality of trips which can be used to assist trip finding module 418 with identifying trips. Demographic association module 428 associates user demographic information with trips. Pattern aggregation module 430 combines mobility patterns of the same mobile device into new mobility patterns for the mobile device. Context association module 432 associates contexts stored at ontology storage 414 with trips. The contexts that are stored at ontology storage 414 can be predefined and reconfigurable. Crowd pattern module 434 combines mobility patterns of different mobile devices into crowd mobility patterns.

The embodiments described herein can also be applied to data sources other than mobile networks (e.g., smart phones, GPS navigators, online check-in services, etc.). The geographical coordinates provided from those data sources can be replaced with a virtual stationID that represents a particular region. Data can be collected from these sources and mobility patterns can be identified from the collected data according to any of the embodiments described herein.

It is to be understood that the above description is intended to be illustrative and not restrictive. Many other embodiments will be apparent to those of skill in the art upon reading and understanding the above description. The scope of the invention should, therefore, be determined with reference to the appended claims, along with the full scope of equivalents to which such claims are entitled.

## Claims

1. A method executed by a computer processor for grouping a plurality of trips of a mobile device, where each trip in the plurality of trips includes a set of trip traces from a plurality of traces for the mobile device, where the plurality of traces is collected from a plurality of base stations and stored in a trace storage, where each base station in the plurality of base stations includes a unique station-ID, where each trace in the plurality of traces includes a station-ID of a base station in the plurality of base stations and an association time indicating when the mobile device was associated with the base station, and where the mobile device is associated with at most one base station at any point in time, the method to group a first trip in the plurality of trips and a second trip in the plurality of trips by calculating an edit distance between the first trip and the second trip using an approximate string matching algorithm, the method comprising the steps of:
identifying (102) a first set of trip traces for the first trip and a second set of trip traces for the second trip in the plurality of traces for the mobile device;
extracting (108) a first ordered set of station-IDs from the first set of trip traces and a second ordered set of station-IDs from the second set of trip traces, wherein each ordered set of station-IDs is ordered by association time;
calculating (110) the edit distance between the first trip and the second trip by applying the approximate string matching algorithm to the first ordered set of station-IDs and the second ordered set of station-IDs;
checking (112) that the edit distance between the first trip and the second trip is less than a preset edit distance threshold; and
grouping (118) the first trip and the second trip into a group of trips in response to determining that the edit distance is less than the preset edit distance threshold.

2. The method of claim 1, wherein identifying the first set of trip traces for the first trip further comprises the steps of:
identifying (104) a first stay including a first stay association time and a second stay including a second stay association time for the mobile device, wherein a stay includes a set of stay traces from the plurality of traces;
identifying a trace having an association time between the first stay association time and the second stay association time; and
adding (106) the trace to the first set oftrip traces of the first trip.

3. The method of claim 2, wherein identifying the first stay further comprises the steps of:
checking whether the mobile device was in an area of sparse base station coverage or an area of dense base station coverage during a particular association time of a particular trace;
in response to determining that the mobile device was in the area of sparse base station coverage:
checking that the particular association time of the particular trace lasted longer than a preset sparse threshold, and
setting the particular trace as the set of stay traces for the first stay; and
in response to determining that the mobile device was in the area of dense base station coverage:
checking that the mobile device had oscillating associations between a set of base stations in the plurality of base stations during at least one of before and after the particular association time of the particular trace,
checking that a total association time for the oscillating associations lasted longer than a preset dense threshold, and
adding the particular trace to the set of stay traces for the first stay.

4. The method of claim 3, wherein identifying the first stay further comprises the step of:
checking that a geographical distance between any two base stations in the set of base stations is less than a preset geographical distance threshold in response to determining that the mobile device was in the area of dense base station coverage.

5. The method of claim 1, further comprising the step of:
associating a user demographic information with the first trip.

6. The method of claim 1, further comprising the steps of:
associating a context with the first trip based on at least one of an association time of the first trip and a geographical location of associated base stations of the first trip, the context providing at least one of temporal and geographical information for the first trip; and
checking that the second trip is associated with the context before grouping the first trip and the second trip into the group of trips.

7. The method of claim 1, further comprising the steps of:
checking (202) that a number of trips in the group of trips has reached a preset count threshold;
identifying (204) a first mobility pattern for the mobile device based on the group of trips in response to determining that the number of trips has reached the preset count threshold, wherein a mobility pattern includes a set of pattern traces from the plurality of traces;
checking (206) that the first trip has a shortest average edit distance to all other trips in the group of trips; and
setting (208) the first set of trip traces of the first trip as the set of pattern traces for the first mobility pattern in response to determining that the first trip has the shortest average edit distance.

8. The method of claim 7, further comprising the steps of:
associating (210) a first context with the first mobility pattern, wherein the first context is associated with every trip in the group of trips; and
indexing (212) the first mobility pattern by the first context when the first mobility pattern is stored in a mobility pattern storage.

9. The method of claim 8, further comprising the steps of:
checking that an edit distance between the first mobility pattern of the mobile device and a second mobility pattern of the mobile device is less than a preset pattern distance threshold;
checking that the first context of the first mobility pattern is different than a second context of the second mobility pattern; and
combining the first mobility pattern and the second mobility pattern into a new mobility pattern for the mobile device, wherein the new mobility pattern is not associated with the first context or the second context.

10. The method of claim 7, further comprising the step of:
calculating an occurrence rating for the first mobility pattern based on the number of trips in the group of trips and a total number of trips for the mobile device.

11. The method of claim 7, further comprising the steps of:
comparing (302) the first mobility pattern of the mobile device to a second mobility pattern of a different mobile device; and
combining (304) the first mobility pattern and the second mobility pattern into a crowd mobility pattern based on at least one of a set of contexts associated with the first mobility pattern, a set of contexts associated with the second mobility pattern, and an edit distance between the first mobility pattern and the second mobility pattern.

12. The method of claim 11, further comprising the step of:
determining a number of mobile devices represented by the crowd mobility pattern.

13. A system for grouping a plurality of trips of a mobile device, wherein each trip in the plurality of trips includes a set of trip traces from a plurality of traces for the mobile device, wherein the plurality of traces is collected from a plurality of base stations, wherein each base station in the plurality of base stations includes a unique station-ID, wherein each trace in the plurality of traces includes a station-ID of a base station in the plurality of base stations and an association time indicating when the mobile device was associated with the base station, and wherein the mobile device is associated with at most one base station at any point in time, the system to group a first trip in the plurality of trips and a second trip in the plurality of trips by calculating an edit distance between the first trip and the second trip using an approximate string matching algorithm, the system comprising:
a trace storage (410) configured to store the plurality of traces;
a trip finding module (418) coupled to the trace storage and configured to identify a first set of trip traces for the first trip and a second set of trip traces for the second trip in the plurality of traces for the mobile device;
an edit distance calculation module (420) configured to:
extract a first ordered set of station-IDs from the first set of trip traces and a second ordered set of station-IDs from the second set of trip traces, wherein each ordered set of station-IDs is ordered by association time, and
calculate the edit distance between the first trip and the second trip by applying
the approximate string matching algorithm to the first ordered set of station-IDs and the second ordered set of station-IDs; and
a trip grouping module (422) configured to:
check that the edit distance between the first trip and the second trip is less than a preset edit distance threshold, and
group the first trip and the second trip into a group of trips in response to determining that the edit distance is less than the preset edit distance threshold.

14. The system of claim 13, further comprising:
a stay finding module (426) coupled to the trace storage and configured to identify a first stay including a first stay association time and a second stay including a second stay association time for the mobile device, wherein a stay includes a set of stay traces from the plurality of traces,
wherein the trip finding module (418) is further configured to:
identify a trace having an association time between the first stay association time and the second stay association time, and
add the trace to the first set of trip traces of the first trip.

15. The system of claim 14, wherein the stay finding module is further configured to:
check whether the mobile device was in an area of sparse base station coverage or an area of dense base station coverage during a particular association time of a particular trace;
in response to determining that the mobile device was in the area of sparse base station coverage:
check that the particular association time of the particular trace lasted longer than a preset sparse threshold, and
set the particular trace as the set of stay traces for the first stay; and
in response to determining that the mobile device was in the area of dense base station coverage:
check that the mobile device had oscillating associations between a set of base stations in the plurality of base stations during at least one of before and after the particular association time of the particular trace,
check that a total association time for the oscillating associations lasted longer than a preset dense threshold, and
add the particular trace to the set of stay traces for the first stay.

16. The system of claim 15, wherein the stay finding module is further configured to check that a geographical distance between any two base stations in the plurality of base stations is less than a preset geographical distance threshold in response to determining that the mobile device was in the area of dense base station coverage.

17. The system of claim 13, further comprising:
a demographic association module (428) configured to associate a user demographic information with the first trip.

18. The system of claim 13, further comprising:
an ontology storage (414) configured to store a plurality of contexts, wherein each context in the plurality of contexts provides at least one of temporal and geographical information; and
a context association module (432) coupled to the ontology storage and configured to associate a context with the first trip based on at least one of an association time of the first trip and a geographical location of associated base stations of the first trip,
wherein the trip grouping module is further configured to check that the second trip is associated with the context before grouping the first trip and the second trip into the group of trips.

19. The system of claim 13, further comprising:
a mobility pattern module (424) configured to:
check that a number of trips in the group of trips has reached a preset count threshold,
identify a first mobility pattern for the mobile device based on the group of trips in response to determining that the number of trips has reached the preset count threshold, wherein a mobility pattern includes a set of pattern traces from the plurality of traces,
check that the first trip has a shortest average edit distance to all other trips in the group of trips, and
set the first set of trip traces of the first trip as the set of pattern traces for the first mobility pattern in response to determining that the first trip has the shortest average edit distance.

20. The system of claim 19, further comprising:
a mobility pattern storage (412) coupled to the mobility pattern module and configured to index the first mobility pattern by a first context when storing the first mobility pattern, wherein the first context is associated with every trip in the group of trips, and
wherein the mobility pattern module is further configured to associate the first context with the first mobility pattern.

21. The system of claim 20, further comprising:
a pattern aggregation module (430) configured to:
check that an edit distance between the first mobility pattern of the mobile device and a second mobility pattern of the mobile device is less than a preset pattern distance threshold,
check that the first context of the first mobility pattern is different than a second context of the second mobility pattern, and
combine the first mobility pattern and the second mobility pattern into a new mobility pattern for the mobile device, wherein the new mobility pattern is not associated with the first context or the second context.

22. The system of claim 19, wherein the mobility pattern module is further configured to calculate an occurrence rating for the first mobility pattern based on the number of trips in the group of trips and a total number of trips for the mobile device.

23. The system of claim 19, further comprising:
a crowd pattern module configured to:
compare the first mobility (434) pattern of the mobile device to a second mobility pattern of a different mobile device, and
combine the first mobility pattern and the second mobility pattern into a crowd mobility pattern based on at least one of a set of contexts associated with the first mobility pattern, a set of contexts associated with the second mobility pattern, and an edit distance between the first mobility pattern and the second mobility pattern.

24. The system of claim 23, wherein the crowd pattern module is further configured to determine a number of mobile devices represented by the crowd mobility pattern.
